# EUROPÄISCHE PATENTSCHRIFT

(11) **EP 2 632 066 B1**
(45) Veröffentlichungstag und Bekanntmachung des Hinweises auf die Patenterteilung: **06.01.2016**
(21) Anmeldenummer: 12157077.4
(22) Anmeldetag: 27.02.2012
(51) Int. Cl.: H04J 3/06, H04N 21/41, H04N 21/414, H04L 29/06, H04N 21/43

(54) **Verfahren und Endgeräte zur Synchronisation einer Wiedergabe von maschinenlesbaren Daten**
Method and and devices for synchronising an output of machine-readable data
Procédé et terminal destinés à la synchronisation d'une retransmission de données lisibles par machine

(43) Veröffentlichungstag der Anmeldung: 28.08.2013
(73) Patentinhaber: OMS Software GmbH, 81241 München (DE)
(72) Erfinder: Kramer, Philipp, 81243 München (DE); Kramer, Thilo, 81243 München (DE); Kramer, Christian, 81243 München (DE)
(74) Vertreter: 2s | ip Schramm Schneider Patentanwälte Rechtsanwälte

(56) Entgegenhaltungen:
- EP-A1- 1 398 931
- WO-A1-2009/144537
- WO-A2-2004/043032
- WO-A2-2009/098669
- US-A1- 2008 291 863
- FERNANDO BORONAT SEGUÃ Â ET AL: "An RTP/RTCP based approach for multimedia group and inter-stream synchronization", MULTIMEDIA TOOLS AND APPLICATIONS, KLUWER ACADEMIC PUBLISHERS, BO, Bd. 40, Nr. 2, 25. Juni 2008 (2008-06-25), Seiten 285-319, XP019647284, ISSN: 1573-7721, DOI: 10.1007/S11042-008-0208-1

## Beschreibung

### Gebiet der Erfindung

Die Erfindung betrifft ein Verfahren zur Synchronisation einer Wiedergabe von maschinenlesbaren Daten an einer Anzahl von Endgeräten. Ferner betrifft die Erfindung ein Endgerät mit einer Schnittstelle zur Herstellung einer Datenverbindung zu weiteren Endgeräten, welches angepasst ist, das erfindungsgemäße Verfahren auszuführen.

### Hintergrund der Erfindung und Stand der Technik

Die Anzahl verfügbarer Geräte, welche über eine Kommunikationsschnittstelle bzw. Datenschnittstelle miteinander verbunden werden können, nimmt stetig zu. Beispielsweise kann ein mobiles Endgerät, etwa ein Mobiltelefon über eine Kommunikationsschnittstelle mit einer Anzahl weiterer Endgeräte verbunden werden, um über die Schnittstelle einen Datenaustausch abzuwickeln.

Neben mobilen Endgeräten, wie etwa Mobiltelefone oder Smartphones verfügen immer mehr Geräte anderer Geräteklassen über entsprechende Schnittstellen. Beispielsweise sind Lautsprecher oder Anzeigeeinrichtungen, wie etwa Bildschirme oder Fernseher bekannt, welche beispielsweise über eine WLAN-Schnittstelle verfügen. Nach dem Herstellen einer Verbindung zwischen einem mobilen Endgerät, etwa ein Smartphone und einem WLAN-Lautsprecher bzw. einer WLANfähigen Anzeigeeinrichtung können Multimediainhalte an die Lautsprechereinrichtung und/oder die Anzeigeeinrichtung übertragen werden und dort wiedergegeben werden. So ist es etwa möglich, ein Smartphone über eine WLAN-Schnittstelle mit einem WLAN-Lautsprecher zu verbinden und ein am Smartphone abgespieltes Musikstück über den WLAN-Lautsprecher wiederzugeben.

Ferner ist es im Stand der Technik auch möglich, eine Datenverbindung zwischen zwei mobilen Endgeräten herzustellen und beispielsweise Multimediainhalte von einem mobilen Endgerät auf das andere mobile Endgerät zu übertragen und dort wiederzugeben.

Mit den vorstehend genannten Möglichkeiten, Geräte miteinander zu verbinden und Informationen, etwa Multimediainhalte an einem verbundenen Endgerät wiederzugeben, besteht der Wunsch, Daten an mehrere Endgeräte zu übertragen, um dort synchron wiedergegeben zu werden. Eine mögliche Anwendung ist beispielsweise die synchrone Wiedergabe eines Musikstückes an mehreren Smartphones.

Aus dem Stand der Technik ist es bekannt, ein Musikstück von einem ersten Endgerät an eine Anzahl zweiter Endgeräte zu übertragen. Nach Abschluss der Übertragung wird die Wiedergabe des Musikstückes an jedem zweiten Endgerät durch den Nutzer des jeweiligen Endgerätes gestartet, wobei zum Zweck der synchronen, d.h., zeitgleichen Wiedergabe die Nutzer versuchen, die Wiedergabe zeitgleich zu starten. Dies hat allerdings den Nachteil, dass ein wirklich zeitgleicher Start der Wiedergabe an allen zweiten Endgeräten nahezu unmöglich ist, sodass die Wiedergabe des Musikstückes an den zweiten Endgeräten zeitversetzt erfolgt. Das Klangerlebnis wird hierdurch selbst bei sehr geringen zeitlichen Verzögerungen erheblich beeinträchtigt.

Selbst wenn der Start der Wiedergabe an allen zweiten Endgeräten tatsächlich zeitgleich erfolgt, ist nicht gewährleistet, dass das Musikstück an sämtlichen zweiten Endgeräten synchron abgespielt wird. Beispielsweise kann es vorkommen, dass es an einigen zweiten Endgeräten während der Wiedergabe des Musikstückes zu Verzögerungen oder gar Unterbrechungen kommt, sodass eine weiterhin synchrone Wiedergabe des Musikstückes nicht mehr möglich ist.

In einem weiteren Szenario ist es mit aus dem Stand der Technik bekannten Endgeräten möglich, ein Musikstück aus dem Internet zu beziehen und auf dem Endgerät wiederzugeben. Hierbei können sich mehrere Endgeräte dasselbe Musikstück aus dem Internet laden und beispielsweise unmittelbar nach dem Start des Ladevorganges mit der Wiedergabe des Musikstückes beginnen. Um eine synchrone bzw. gleichzeitige Wiedergabe an den Endgeräten zu gewährleisten, muss der Ladevorgang auf allen Endgeräten zeitgleich gestartet werden, was ebenfalls nahezu unmöglich ist. Ferner ist die synchrone Wiedergabe an mehreren Endgeräten in diesem Szenario erheblich von der sogenannten Download-Geschwindigkeit abhängig. Bei einer langsamen Internetverbindung kann es vorkommen, dass während der Wiedergabe eines Musikstückes Teile der wiederzugebenden Daten noch nicht übertragen worden sind, was solange zu einer Unterbrechung der Wiedergabe führt, bis die benötigten Daten übertragen worden sind.

Das Problem der langsamen Internetverbindungen wird im Stand der Technik dadurch gelöst, dass der Start der Wiedergabe nicht unmittelbar nach dem Start der Übertragung erfolgt, sondern die übertragenen Daten zunächst für einen bestimmten Zeitraum zwischengespeichert werden (Puffer) und erst dann die Wiedergabe basierend auf den zwischengespeicherten Daten erfolgt. Allerdings kann auch damit nicht sichergestellt werden, dass selbst bei einem zeitgleichen Start der Wiedergabe an mehreren Endgeräten das Musikstück über die gesamte Dauer des Musikstückes synchron abgespielt wird, weil es auch bei zwischengespeicherten Daten zu Verzögerungen oder Unterbrechungen, wie in dem vorhergehenden Beispiel beschrieben, kommen kann.

Aus der WO 2009/144537 A1 ist ein Verfahren zum Streamen von Audiodaten über ein drahtloses Kommunikationsnetzwerk bekannt. Ein Sender teilt den Empfängern mit, wann die Wiedergabe der Audiodaten beginnen soll. Hierzu wird zwischen dem Sender und den Empfängern eine gemeinsame Uhrzeit ausgehandelt, die als Basis für den Zeitpunkt der Wiedergabe herangezogen wird. Sich wiederholende Signale des drahtlosen Kommunikationsnetzwerkes (z.B. eines Bluetooth Piconetzes) werden verwendet, um die Uhrzeiten von Sender und Empfänger zu synchronisieren.

Aus Segui et al, "An RTP/RTCP based approach for multimedia group and interstream synchronization", Multimedia Tool Appl. (2008), ist ein Verfahren zur Synchronisation von gestreamten Daten unter Verwendung des RTP-Protokolls bekannt. Ein Mastergerät teilt den Clientgeräten mit, wann die Wiedergabe eines Multimediainhaltes an den Clientgeräten beginnen soll. Dabei wird die Uhrzeit der Clientgeräte mit der Uhrzeit des Mastergeräts synchronisiert, wofür Funktionalitäten des RTP-Protokolls verwendet werden.

Aus der EP 1 398 931 A1 ist ein einem Verfahren zum synchronen Wiedergeben von an Endgeräten übertragenen Mediendaten bekannt. Die Mediendaten werden als Pakete an die Endgeräte übertragen und enthalten einen Zeitstempel. Die übertragenen Mediendaten werden an den Endgeräten in einem Buffer gespeichert. Mit der Wiedergabe an den Endgeräten wird begonnen, sobald eine gemeinsame Startzeit erreicht worden ist. Diese gemeinsame Startzeit wird als Offset an die in den Paketen angegebene Zeit hinzugefügt. Das Offset wird zwischen dem ersten Endgerät und den zweiten Endgeräten ausgehandelt. Die Startzeit basiert auf einer gemeinsamen Uhrzeit.

### Aufgabe der Erfindung

Aufgabe der vorliegenden Erfindung ist es daher, Lösungen bereitzustellen, welche es ermöglichen, Daten insbesondere Multimediainhalte, an einer Anzahl von Endgeräten synchron wiederzugeben, wobei auch gewährleistet sein soll, dass Verzögerungen oder Unterbrechungen der Wiedergabe an einem Endgerät die Synchronität der Wiedergabe nicht wesentlich beeinflussen.

### Erfindungsgemäße Lösung

Diese Aufgabe wird erfindungsgemäß durch ein Verfahren zur Synchronisation einer Wiedergabe von maschinenlesbaren Daten an einer Anzahl von Endgeräten sowie durch ein Endgerät, welches angepasst ist, das erfindungsgemäße Verfahren auszuführen, und durch ein Computerprogrammprodukt nach den unabhängigen Ansprüchen gelöst. Vorteilhafte Ausgestaltungen und Weiterbildungen der Erfindung sind in den jeweiligen abhängigen Ansprüchen angegeben.

Bereitgestellt wird demnach ein Verfahren zur Synchronisation einer Wiedergabe von maschinenlesbaren Daten,
- wobei die maschinenlesbaren Daten als mindestens ein Datenstrom von einem ersten Endgerät an eine Anzahl zweiter Endgeräte übertragen werden, um an den zweiten Endgeräten wiedergegeben zu werden, und
- wobei das erste Endgerät zumindest ein Startsignal erzeugt, welches eine Information darüber enthält, wann die Wiedergabe der übertragenen maschinenlesbaren Daten an den zweiten Endgeräten starten soll, und das Startsignal an die zweiten Endgeräte überträgt.
- wobei die Information eine erste Zeitinformation und eine zweite Zeitinformation umfasst, wobei die erste Zeitinformation ein von einem Zeitgeber des ersten Endgerätes bereitgestellter absoluter Zeitwert ist, und wobei die zweite Zeitinformation einen relativen Zeitwert bezogen auf die erste Zeitinformation oder einen absoluten Zeitwert umfasst, wobei die zweite Zeitinformation den Zeitpunkt des Starts der Wiedergabe der übertragenen maschinenlesbaren Daten angibt,
- wobei das erste Endgerät zu vorbestimmten Zeitpunkten nach dem Start der Wiedergabe zumindest ein Synchronisationssignal erzeugt und an die zweiten Endgeräte überträgt, wobei das Synchronisationssignal eine Information über eine vorbestimmte zeitliche Position der Wiedergabe umfasst, wobei
   - das erste Endgerät von zumindest einem zweiten Endgerät eine Statusinformation empfängt, wobei die Statusinformation die Identifikationskennung des jeweiligen zweiten Endgerätes und eine Zeitinformation, welche die aktuelle zeitliche Position der Wiedergabe an dem jeweiligen zweiten Endgerätes angibt, umfasst, und
   - die vorbestimmte zeitliche Position der Wiedergabe aus den Zeitinformationen der empfangenen Statusinformation ermittelt wird.

Das Vorsehen des Startsignals hat den Vorteil, dass die Wiedergabe synchron, vorzugsweise zeitgleich erfolgen kann.

Damit wir in vorteilhafter Weise erreicht, dass die Wiedergabe nicht unmittelbar nach dem Beginn der Übertragung gestartet werden muss. Zweite Geräte mit unterschiedlichen Leistungen oder zweite Geräte, welche über unterschiedlich schnelle Datenverbindungen mit dem ersten Endgerät gekoppelt sind können so auf einfache Weise synchronisiert werden. Die zweiten Endgeräte können so die empfangenen Daten zwischenspeichern.

Für jedes zweite Endgerät kann ein individuelles Startsignal erzeugt werden, wobei das individuelle Startsignal eine Identifikationskennung des jeweiligen zweiten Endgerätes umfasst.

Damit ist es möglich die Wiedergabe an mehreren zweiten Endgeräten zu synchronisieren, und gleichzeitig für jedes zweite Endgerät einen anderen Startzeitpunkt für die Wiedergabe festzulegen.

Vorzugsweise nimmt das erste Endgerät von den zweiten Endgeräten Verbindungsaufbauanfragen entgegen, welche zumindest eine Identifikationskennung des jeweiligen zweiten Endgerätes umfassen, speichert die Identifikationskennungen, und überträgt an zumindest eines der zweiten Endgeräte eine Anfragebestätigung.

Die individuellen Startsignale können zeitgleich und nach dem Start der Übertragung des Datenstromes übertragen werden und in dem ersten Endgerät gespeichert werden.

Das Startsignal kann nach dem Start der Übertragung des Datenstromes übertragen werden und in dem ersten Endgerät gespeichert werden.

Vor dem Ermitteln der vorbestimmten Position kann die empfangenen Zeitinformationen unter Zuhilfenahme der gespeicherten individuellen Startsignale normiert werden. Dadurch können etwa Verzögerungen in dem Übertragungsweg ausgeglichen werden. Ferner können unterschiedlich definierte Startzeitpunkt berücksichtigt werden.

Das zweite Endgerät kann ferner
- die maschinenlesbaren Daten als Datenstrom von einem ersten Endgerät empfängt, um an dem zweiten Endgerät wiedergegeben zu werden,
- von dem ersten Endgerät ein Startsignal empfangen, welches eine Information darüber enthält, wann die Wiedergabe der übertragenen maschinenlesbaren Daten starten soll, und
- die Wiedergabe der maschinenlesbaren Daten in Abhängigkeit des Startsignals starten.

Das Startsignal kann eine Identifikationskennung umfassen, wobei das zweite Endgerät aus einer Anzahl empfangener Startsignale das ihm zugedachte Startsignal anhand der Identifikationskennung ermittelt. Damit wird es erstmals möglich die Wiedergabe an mehreren zweiten Endgeräten zu synchronisieren wenn die Übertragung der wiederzugebenden Daten in einem Broadcast-Verfahren erfolgt.

Das zweite Endgerät kann zu vorbestimmten Zeitpunkten eine Statusinformation erzeugen, wobei die Statusinformation die Identifikationskennung des zweiten Endgerätes und eine Zeitinformation, welche die aktuelle Position der Wiedergabe an dem zweiten Endgerät angibt, umfasst, und die Statusinformation an das erste Endgerät überträgt.

Das zweite Endgerät kann von dem ersten Endgerät ein Synchronisationssignal empfangen, wobei das Synchronisationssignal eine Information über eine vorbestimmte Position der Wiedergabe umfasst.

Das zweite Endgerät kann unter Berücksichtigung des empfangenen Startsignals aus dem Synchronisationssignal eine Soll-Position der Wiedergabe ermitteln, und die Wiedergabe an dem zweiten Endgerät an der Soll-Position fortsetzen.

Das erste Endgerät und die zweiten Endgeräte können mobile Kommunikationsgeräte, Lautsprecher und/oder Bildwiedergabeeinrichtungen sein. Die Übertragung des Datenstromes, der Startsignale, der Synchronisationssignale und der Statusinformationen kann über eine drahtlose Schnittstelle erfolgen. Die maschinenlesbaren Daten können Multimediainhalte umfassen, Musikdaten und/oder Videodaten.

In einem Ausführungsbeispiel der Erfindung überträgt ein Smartphone (erstes Endgerät) Audiodaten über eine drahtlose Schnittstelle an mehrere weitere Smartphones (zweite Endgeräte), welche die empfangenen Audiodaten synchron wiedergeben, wobei der Start der Wiedergabe durch das erste Endgeräte initiiert wird. Das erste Endgerät kann die Synchronität der Wiedergabe überwachen und ggf. wiederherstellen, indem entsprechende Statusinformationen von den zweiten Endgeräten empfangen und Synchronisationsinformationen an die zweiten Endgeräte übertragen werden.

Bereit gestellt wird durch die Erfindung ferner ein Endgerät, insbesondere mobiles Kommunikationsgerät, Lautsprecher und / oder Bildwiedergabeeinrichtung, welches eine Schnittstelle, vorzugsweise eine drahtlose Schnittstelle zur Herstellung einer Datenverbindung zu einer Anzahl weiterer Endgeräte aufweist, und welches angepasst ist eines oder beide der erfindungsgemäßen Verfahren auszuführen.

Die drahtlose Schnittstelle umfasst zumindest eines aus WLAN-Schnittstelle, Bluetooth-Schnittstelle, und Infrarot-Schnittstelle. Die Endgeräte können auch über eine drahtgebundene Schnittstelle gekoppelt werden.

Ferner wird ein Computerprogrammprodukt bereitgestellt, das in den internen Speicher eines Endgerätes, insbesondere mobiles Kommunikationsgerät, Lautsprecher und / oder Bildwiedergabeeinrichtung geladen werden kann und welches Programmabschnitte umfasst, mit denen die Schritte der erfindungsgemäßen Verfahren ausgeführt werden, wenn das Produkt auf dem Endgerät zu Ausführung gebracht wird. Das Computerprogrammprodukt kann insbesondere eine mobile Applikation sein, welche auf das Endgerät geladen und dort zur Ausführung gebracht werden kann.

### Kurzbeschreibung der Figuren

Weitere Einzelheiten und Merkmale der Erfindung ergeben sich aus der nachfolgenden Beschreibung in Verbindung mit der Zeichnung. Es zeigt:
- Fig. 1: eine Anzahl von Endgeräten, welche miteinander gekoppelt sind und welche angepasst sind, das erfindungsgemäße Verfahren auszuführen;
- Fig. 2: eine Anzahl erfindungsgemäßer Endgeräte, wobei eines der Endgeräte mit einer Servereinrichtung (Webserver) gekoppelt ist;
- Fig. 3: ein Sequenzdiagramm in einer vereinfachten UML-Notation zur Beschreibung des erfindungsgemäßen Verfahrens;

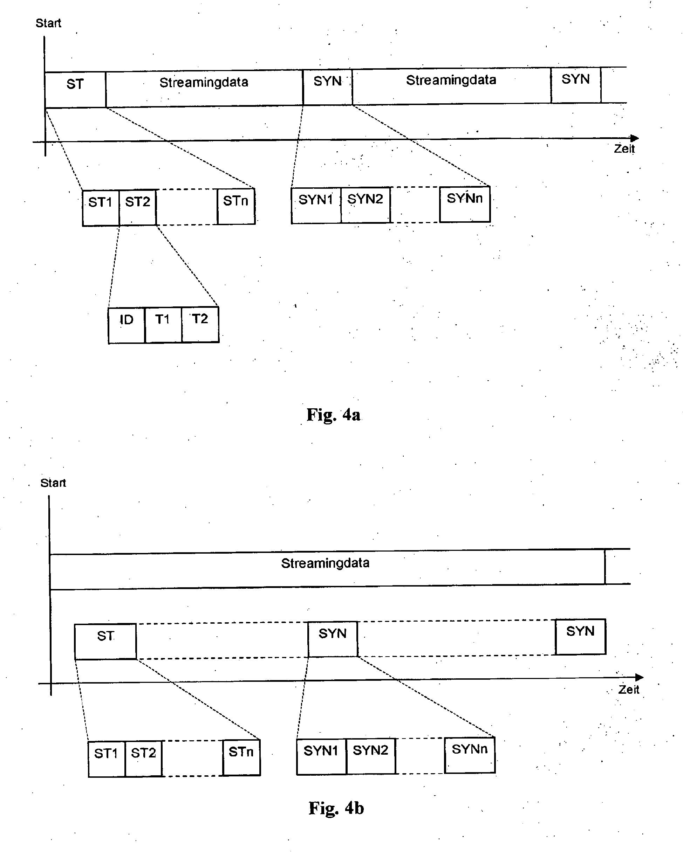

- Fig. 4a: ein erstes Beispiel eines Datenformates für einen Datenstrom, welches zur Synchronisation einer Wiedergabe von maschinenlesbaren Daten an einer Anzahl von Endgeräten angepasst ist; und
- Fig. 4b: ein zweites Beispiel eines Datenformates für einen Datenstrom, welches zur Synchronisation einer Wiedergabe von maschinenlesbaren Daten an einer Anzahl von Endgeräten angepasst ist, wobei die Steuerinformationen getrennt von den wiederzugebenden Daten übertragen werden.

### Detaillierte Beschreibung der Erfindung

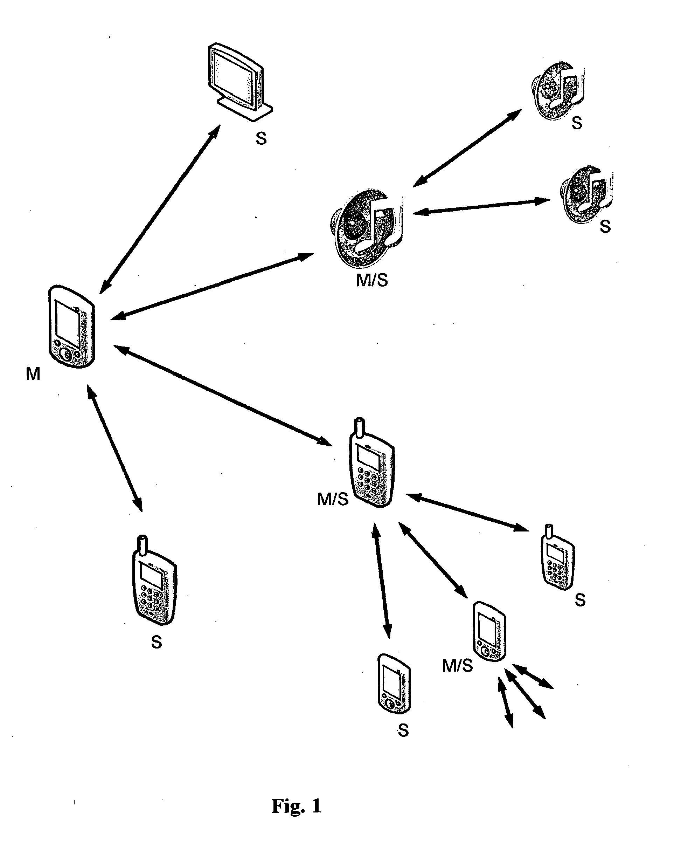

**Fig. 1** zeigt beispielhaft eine Anzahl von Endgeräten, welche über eine Schnittstelle miteinander gekoppelt bzw. verbunden sind. Über die Schnittstelle wird der Datenaustausch zwischen den gekoppelten Endgeräten abgewickelt. Die Schnittstelle kann beispielsweise eine WLAN-Schnittstelle, eine Bluetooth-Schnittstelle, eine Infrarot-Schnittstelle oder eine für einen Datenaustausch zwischen zwei Endgeräten geeignete Schnittstelle sein. Ferner ist es auch möglich, zwei Endgeräte über eine drahtgebundene Schnittstelle miteinander zu verbinden. Ebenfalls ist es möglich, dass ein Endgerät mehrere der vorstehend genannten Schnittstellen aufweist, sodass ein Endgerät Kommunikationsverbindungen zu unterschiedlichen weiteren Endgeräten über jeweils eine andere Schnittstelle aufbauen kann. Ebenso ist es möglich, dass ein Endgerät über eine Schnittstelle mehrere Kommunikationsverbindungen zu mehreren Endgeräten aufbauen kann. Beispielsweise kann es vorgesehen sein, dass ein Endgerät über eine WLAN-Schnittstelle Datenverbindungen zu mehreren weiteren Endgeräten aufbauen kann, wobei diese Datenverbindungen vorzugsweise parallel eingerichtet sind.

Bei den zu übertragenden Daten handelt es sich vorzugsweise um Multimediainhalte, etwa Musikdateien, Videodateien oder dergleichen.

Erfindungsgemäß werden die Multimediainhalte von einem ersten Endgerät an eine Anzahl zweiter Endgeräte übertragen und dort wiedergegeben. Die Wiedergabe der Multimediainhalte an den zweiten Endgeräten erfolgt erfindungsgemäß synchron. Beispielsweise kann die Wiedergabe der an die zweiten Endgeräte übertragenen Multimediainhalte zeitgleich gestartet werden, sodass die Wiedergabe an allen zweiten Endgeräten zeitgleich und ohne zeitliche Verzögerung erfolgt.

In dem in Fig. 1 gezeigten Beispiel ist ein erstes Endgerät M, welches als Master-Gerät dient, mit zwei zweiten Endgeräten S gekoppelt. Die zweiten Endgeräte S werden auch als Slave-Geräte bezeichnet. Ferner ist das erste Endgerät M mit zwei weiteren zweiten Endgeräten M/S gekoppelt, welche hier auch als Master/Slave-Geräte bezeichnet werden. Die Master/Slave-Geräte M/S sind ihrerseits wiederum mit einer Anzahl weiterer Endgeräte gekoppelt, welche wiederum als Slave-Geräte S oder als Master/Slave-Geräte M/S betrieben werden können.

Mit Bezug auf das Master-Gerät M arbeitet das Master/Slave-Gerät M/S als Slave-Gerät S. Mit Bezug auf ein Slave-Gerät S arbeitet das Master/Slave-Gerät M/S als Master-Gerät M. Damit wird es möglich, ein Master-Gerät M mit einem oder mehreren Slave-Geräten S zu koppeln, wobei die Koppelung über eine Anzahl von Master/Slave-Geräten M/S erfolgt.

In dem in Fig. 1 gezeigten Beispiel kann das Master-Gerät M Multimediainhalte an ein Master/Slave-Gerät M/S übertragen, welches ihrerseits wiederum die Multimediainhalte an weitere Slave-Geräte S übertragen kann. Erfindungsgemäß können die an das Master/Slave-Gerät M/S und an die Slave-Geräte S übertragenen Multimediainhalte synchron sowohl an dem Master/Slave-Gerät M/S als auch an den Slave-Geräten S abgespielt bzw. wiedergegeben werden. Damit wird es möglich, synchron wiederzugebende Multimediainhalte auch über weite Strecken zu übertragen, wenn etwa eine Kommunikationsverbindung zwischen einem Master-Gerät M und einem Slave-Gerät S aufgrund ihrer Entfernung nicht direkt aufgebaut werden kann. In diesem Zusammenhang kann ein Master/Slave-Gerät M/S auch lediglich als sogenannter Repeater betrieben werden, d.h., die von dem Master/Slave-Gerät M/S empfangenen Multimediainhalte werden lediglich an die Slave-Geräte S weitergeleitet ohne jedoch an dem Master/Slave-Gerät M/S wiedergegeben zu werden.

Ferner ist es möglich, die Verbindung zwischen dem Master-Gerät M und einem Master/Slave-Gerät M/S über eine andere Schnittstelle herzustellen, als die Verbindung zwischen dem Master/Slave-Gerät M/S und den Slave-Geräten S. Beispielsweise kann die Verbindung zwischen dem Master-Gerät M und dem Master/Slave-Gerät M/S über eine WLAN-Schnittstelle hergestellt werden und die Verbindung zwischen dem Master/Slave-Gerät M/S und den Slave-Geräten S über eine Bluetooth-Schnittstelle.

Erfindungsgemäß werden die an den zweiten Endgeräten wiederzugebenden Multimediainhalte als mindestens ein Datenstrom an diese übertragen, sodass unmittelbar nach Beging der Übertragung ein Start der Wiedergabe an den zweiten Endgeräten möglich ist.

Ferner ist es erfindungsgemäß möglich, die Multimediainhalte in Form mehrerer Datenströme an die zweiten Endgeräte zu übertragen, wobei die mehreren Datenströme jeweils einen unterschiedlichen Inhalt aufweisen können. Beispielsweise kann an ein erstes Slave-Gerät S ein erster Datenstrom übertragen werden, welcher Daten eines ersten Audiokanals einer Audiodatei enthält, und an ein zweites Slave-Gerät S ein zweiter Datenstrom übertragen werden, welcher Daten eines zweiten Audiokanals der Audiodatei enthält. Bei synchroner Wiedergabe der Daten an den beiden Slave-Geräten kann so auf einfache Art und Weise ein Stereo-Effekt erzielt werden.

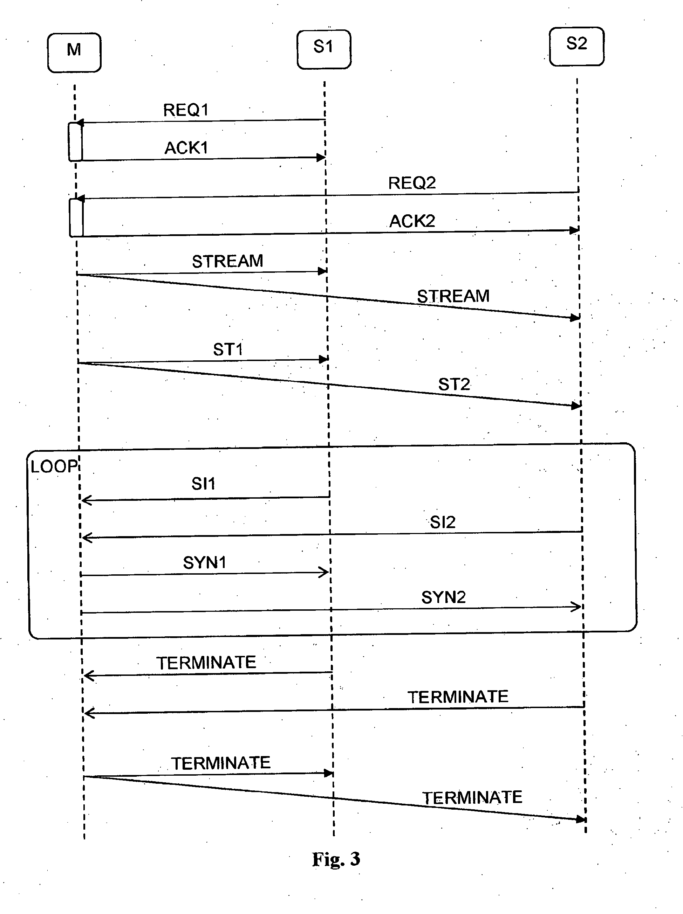

Bei den Kommunikationsverbindungen zwischen dem Master-Gerät und den Slave-Geräten, zwischen dem Master-Gerät und den Master/Slave-Geräten bzw. zwischen den Master/Slave-Geräten und weiteren Slave-Geräten handelt es sich um bidirektionale Kommunikationsverbindungen, da zur Überwachung der Synchronität der Wiedergabe an den einzelnen Endgeräten Statusinformationen von den Slave-Geräten bzw. von den Master/Slave-Geräten an das Master-Gerät übertragen werden müssen, wie mit Bezug auf Fig. 3 näher erläutert wird.

Das Starten der Wiedergabe der Multimediainhalten an den Master/Slave-Geräten und/oder an den Slave-Geräten wird gemäß einer Ausführungsform der Erfindung an dem Master-Gerät M initiiert. Das Master-Gerät M erzeugt dann ein Startsignal und überträgt dieses an die Master/Slave-Geräte bzw. an die Slave-Geräte, welche daraufhin die Wiedergabe der Multimediainhalte starten. Selbstverständlich können die Multimediainhalte zusätzlich auch auf dem Master-Gerät M selbst wiedergegeben werden.

Gemäß einer weiteren Ausführungsform der Erfindung kann der Start der Wiedergabe auch an einem Master/Slave-Gerät oder an einem Slave-Gerät initiiert werden, wobei in diesem Fall das Master-Gerät M über den Start der Wiedergabe durch das Master/Slave-Gerät oder das Slave-Gerät informiert wird, welches daraufhin ein Startsignal erzeugt und an die verbundenen Master/Slave-Geräte bzw. Slave-Geräte überträgt. Die weitere Kontrolle der Wiedergabe obliegt anschließend dem Master-Gerät M.

Wie mit Bezug auf Fig. 3 näher erläutert wird, können die Master/Slave-Geräte bzw. die Slave-Geräte während der Wiedergabe der Multimediainhalte Statusinformationen an das Master-Gerät M übermitteln, welche es dem Master-Gerät M ermöglichen zu überprüfen, ob die Synchronität der Wiedergabe eingehalten ist. Stellt das Master-Gerät M anhand der empfangenen Statusinformationen fest, dass die Wiedergabe nicht mehr synchron ist, kann das Master-Gerät M ein Synchronisationssignal SYN erzeugen und dieses an die Master/Slave-Geräte bzw. Slave-Geräte übermitteln. Anhand des empfangenen Synchronisationssignals SYN können die Endgeräte dann die Wiedergabe synchronisieren.

Erfindungsgemäß ist es auch möglich, dass während der synchronen Wiedergabe von Multimediainhalten ein weiteres zweites Endgerät (Slave-Gerät oder Master/Slave-Gerät) an der synchronen Wiedergabe teilnimmt. Mit Hilfe der Synchronisationsinformation SYN kann die Wiedergabe an dem neu teilnehmenden Endgerät synchronisiert werden.

**Fig**. **2** zeigt ein Master-Gerät M, welches mit drei Slave-Geräten S gekoppelt ist. Ferner ist das Master-Gerät M über ein Kommunikationsnetzwerk, etwa das Internet mit einer Datenverarbeitungseinrichtung D, etwa ein Webserver gekoppelt. Die Datenverarbeitungseinrichtung D stellt Multimediainhalte zum Download bereit. Das Master-Gerät M kann einen Download von Multimediainhalten, etwa eines digitalen Musikstückes initiieren und gemäß der Erfindung die Daten des empfangenen Musikstückes als Datenstrom an die angeschlossenen Slave-Geräte S übertragen. Die Kontrolle der Synchronität der Wiedergabe an den Slave-Geräten S obliegt wiederum dem Master-Gerät M. In einer weiteren Ausgestaltung der Erfindung ist es auch möglich, die Kontrolle der Synchronität der Wiedergabe der Datenverarbeitungseinrichtung D zu übergeben, sodass das Master-Gerät M im Wesentlichen als Master/Slave-Gerät M/S fungiert.

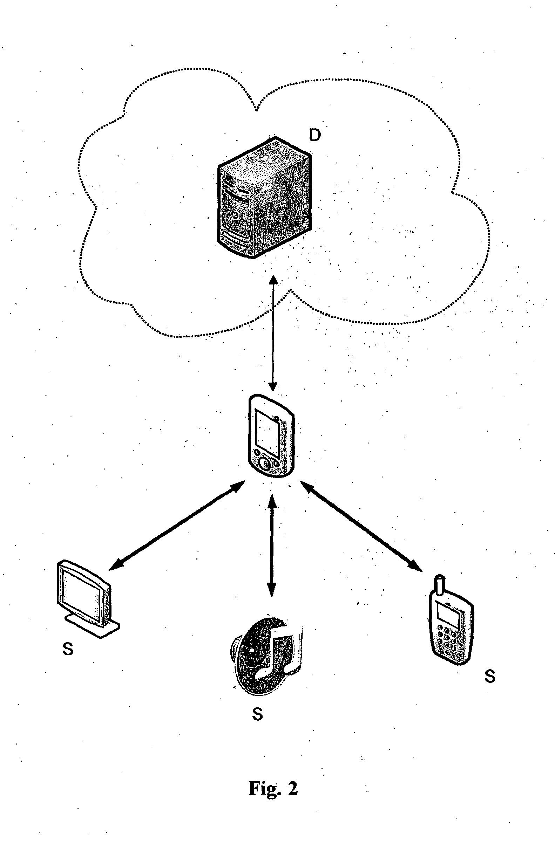

Sowohl bei dem Beispiel nach Fig. 1 als auch bei dem Beispiel nach Fig. 2 wird in vorteilhafter Weise gewährleistet, dass an sämtlichen Endgeräten die Multimediainhalte synchron wiedergegeben werden, weil zum einen der Start der Wiedergabe mit Hilfe eines von dem Master-Gerät M erzeugten Startsignals getriggert wird und zum anderen mit Hilfe der Statusinformationen und dem Synchronisationssignal SYN die Synchronität der Wiedergabe, sofern notwendig, wiederhergestellt werden kann.

In einem Anwendungsbeispiel kann sich eine Anzahl von in einem Raum befindlichen Endgeräten, etwa Smartphones, zu einem Netzwerk zum Zwecke der Wiedergabe von Multimediainhalten zusammenschließen. Eines der Smartphones übernimmt die Funktion des Master-Gerätes und überträgt Multimediainhalte, etwa eine Audiodatei in Form eines Datenstromes an die anderen Smartphones, welche als Slave-Geräte fungieren. Nach dem Start der Wiedergabe, welche an dem Master-Gerät initiiert wird, wird die Audiodatei synchron an den Slave-Geräten und gegebenenfalls an dem Master-Gerät wiedergegeben.

Synchrone Wiedergabe bedeutet in diesem Fall nicht ausschließlich die zeitlich parallele Wiedergabe, bei der die Wiedergabe an allen Endgeräten zeitgleich gestartet wird, sondern auch die synchrone Wiedergabe an mehreren Endgeräten, wobei der Start der Wiedergabe an einigen Endgeräten zeitlich verzögert erfolgen kann.

Wie vorstehend ausgeführt, kann es sich bei den zweiten Endgeräten bzw. bei den Slave-Geräten S auch um Lautsprecher mit einer entsprechenden Kommunikationsschnittstelle handeln (beispielsweise WLAN-Lautsprecher bzw. WLAN-Aktivlautsprecher). In Abhängigkeit des Abstandes der Lautsprecher zu dem Zuhörer kann die Wiedergabe an den weiter entfernten Lautsprechern zeitverzögert gestartet werden. Die Information über die Zeitverzögerung des Starts ist in dem Startsignal enthalten. Dies ist insbesondere dann vorteilhaft, wenn mit mehreren Lautsprechern größere Räume, Säle oder Hallen, insbesondere Konzerthallen beschallt werden sollen. Auch hier wird anhand der Statusinformationen ein entsprechendes Synchronisationssignal SYN erzeugt, welches gewährleistet, dass die Wiedergabe an den einzelnen Endgeräten zu jedem Zeitpunkt synchron erfolgt, d.h. mit der ursprünglich in dem Startsignal definierten zeitlichen Verzögerung.

Selbstverständlich kann für die synchrone Wiedergabe mit einer zeitlichen Verzögerung an einzelnen Endgeräten auch jede andere Art von Endgeräten, etwa Mobiltelefone oder dergleichen verwendet werden.

**Fig. 3** zeigt ein Sequenzdiagramm des erfindungsgemäßen Verfahrens in einer vereinfachten UML-Notation.

In einem ersten Schritt stellt ein erstes Slave-Gerät S1 eine Verbindungsaufbauanfrage REQ1 an das Master-Gerät M, welches die Verbindungsaufbauanfrage mit einem Bestätigungssignal ACK1 bestätigt. Die Verbindungsaufbauanfrage REQ1 kann eine eindeutige Kennung des ersten Slave-Gerätes S1 umfassen. Die eindeutige Kennung kann beispielsweise die MAC-Adresse des Schnittstellenadapters des Slave-Gerätes S1 sein.

Ferner stellt auch ein zweites Slave-Gerät S2 eine Verbindungsaufbauanfrage REQ2 an das Master-Gerät M, welches die Anfrage mit einer Bestätigungsnachricht ACK2 bestätigt.

Die Bestätigung der Verbindungsaufbauanfragen ist optional. Ferner ist das Übermitteln der Gerätekennung an das Master-Gerät M ebenfalls optional und muss nur dann vorgesehen werden, wenn zwischen dem Master-Gerät M und den Slave-Geräten S1, S2 keine dedizierten Kommunikationsverbindungen hergestellt werden und die Übertragung der Multimediainhalte an die Slave-Geräte S1, S2 in einem sogenannten Broadcast-Verfahren erfolgt. Damit das Master-Gerät M im Broadcast-Verfahren Synchronisationsnachrichten SYN erzeugen und den entsprechenden Slave-Geräten S1, S2 zuordnen kann ist die Gerätekennung der jeweiligen Slave-Geräte erforderlich.

Nachdem sich die Slave-Geräte S1, S2 bei dem Master-Gerät M erfolgreich angemeldet haben, kann die Datenübertragung an die Slave-Geräte S1, S2 gestartet werden (STREAM). Die Übertragung der Multimediainhalte an die Slave-Geräte S1, S2 erfolgt vorzugsweise parallel. Die Slave-Geräte S1, S2 nehmen den Datenstrom entgegen und können diesen in dem Endgerät zwischenspeichern, vorzugsweise so lange bis die Slave-Geräte S1, S2 von dem Master-Gerät M ein Startsignal ST empfangen.

Gleichzeitig oder zeitlich nach dem Start der Übertragung der Multimediainhalte erzeugt das Master-Gerät M zwei Startsignale ST1, ST2, wobei das Startsignal ST1 dem ersten Slave-Gerät S1 und das Startsignal ST2 dem zweiten Slave-Gerät S2 zugeordnet sind. Die Startsignale enthalten Informationen darüber, wann die Wiedergabe der übertragenen Multimediainhalte an den Slave-Geräten starten soll. Die Startsignale können auch die Information "unmittelbar" enthalten, welche die Slave-Geräte S1, S2 anweist, die Wiedergabe unmittelbar nach dem Erhalt des Startsignals zu starten.

Das Startsignal ST umfasst ferner eine erste Zeitinformation T1. Die erste Zeitinformation T1 kann ein von einem Zeitgeber des Master-Gerätes M bereitgestellter absoluter Zeitwert (beispielsweise die aktuelle Uhrzeit des Master-Gerätes M) sein. Die erste Zeitinformation T1 ist für alle Slave-Geräte S1, S2 identisch und ist notwendig, um sämtlichen Slave-Geräten eine einheitliche Bezugszeit für die Synchronisation zur Verfügung zu stellen.

In einem anderen Ausführungsbeispiel der Erfindung kann anstelle der Information unmittelbar" das Startsignal ST auch eine zweite Zeitinformation T2 umfassen, wobei die zweite Zeitinformation T2 einen relativen Zeitwert bezogen auf die erste Zeitinformation T1 (z.B. fünf Sekunden) oder einen absoluten Zeitwert

(Zeitinformation T1 + fünf Sekunden) umfasst. Die zweite Zeitinformation T2 gibt den Zeitpunkt des Starts der Wiedergabe der übertragenen Multimediainhalte an.

Die von dem Master-Gerät M erzeugten Startsignale ST1, ST2 werden gleichzeitig an die Slave-Geräte S1, S2 übertragen. Damit ist sichergestellt, dass für sämtliche Slave-Geräte S1, S2 die erste Zeitinformation T1 die korrekte Bezugszeit darstellt.

Bei der ersten Zeitinformation können auch Laufzeitdifferenzen, welche auf den Übertragungswegen zwischen dem Master-Gerät M und den Slave-Geräten S1, S2 auftreten, berücksichtigt werden. Dies kann beispielsweise dadurch realisiert werden, indem die Slave-Geräte S1, S2 den Empfang der Startsignale ST1, ST2 quittieren und eine entsprechende Nachricht an das Master-Gerät M übertragen. Die Quittierung erfolgt unmittelbar nach Empfang der Startsignale. Aus den Empfangszeiten der Quittierungsnachricht an dem Master-Gerät M können die Laufzeitdifferenzen abgeleitet werden und die erste Zeitinformation für jedes der Slave-Geräte S1, S2 entsprechend angepasst werden. Diese Laufzeitdifferenzen werden vorteilhafterweise auch bei dem Erstellen der Synchronisationsnachrichten SYN1, SYN2, mit welchen die Wiedergabe an den Slave-Geräten S1, S2 synchronisiert wird, berücksichtigt werden.

Die Laufzeitdifferenzen können auch vor dem Übertragen der Startsignale ST1, ST2 ermittelt werden, indem etwa der Erhalt der der Bestätigungsnachricht ACK2 durch die Endgeräte quittiert werden muss.

Nach Erhalt der Startsignale ST1, ST2 werten die Slave-Geräte S1, S2 die Startsignale aus und starten in Abhängigkeit von der Auswertung die Wiedergabe der empfangenen Multimediainhalte.

Während der Wiedergabe der Multimediainhalte erzeugen die Slave-Geräte S1, S2 in regelmäßigen oder unregelmäßigen Abständen Statusinformationen SI1, SI2 und übertragen diese an das Master-Gerät M. Die Statusinformationen SI1, SI2 umfassen eine Identifikationskennung des jeweiligen Slave-Gerätes sowie eine Zeitinformation TS, welche die aktuelle Position (zeitliche Position, z.B. 01:24,234) der Wiedergabe der Multimediainhalte an dem Slave-Gerät angibt.

Anhand der empfangenen Statusinformationen SI1, SI2 bzw. der darin enthaltenen Zeitinformationen TS und anhand der Empfangszeitpunkte, an denen die Statusinformationen SI1, SI2 empfangen werden, kann das Master-Gerät M überprüfen, ob die Wiedergabe der Multimediainhalte an sämtlichen Slave-Geräten synchron ist. Bei dieser Überprüfung kann auch die für das jeweilige Slave-Gerät festgelegte zweite Zeitinformation T2 in dem jeweiligen Startsignal ST1, ST2 berücksichtigt werden. Ferner können bei dieser Überprüfung auch die anfänglich ermittelten Laufzeitdifferenzen berücksichtigt werden.

Die Synchronität der Wiedergabe auch dann festgestellt werden, wenn die Statusinformationen SI1, SI2 nicht zeitgleich von den jeweiligen Slave-Geräten S1, S2 erzeugt werden. Wird beispielsweise von dem zweiten Slave-Gerät S2 die Statusinformation SI2 eine Sekunde nach der Startinformation SI1 erzeugt und übertragen, kann das Master-Gerät M anhand der zuvor von dem ersten Slave-Gerät S1 empfangenen Statusinformation SI1 die Position der Wiedergabe an dem ersten Slave-Gerät S1 zum Zeitpunkt des Empfanges der Statusinformation SI2 bestimmen. Das Ermitteln der Position der Wiedergabe an dem ersten Slave-Gerät S1 zum Zeitpunkt des Empfangs der zweiten Statusinformation SI2 kann beispielsweise durch Extrapolation erfolgen. Weicht die so ermittelte Position der Wiedergabe an dem ersten Slave-Gerät S1 von der Position TS in der zweiten Statusinformation SI2 ab, muss die Wiedergabe an den beiden Endgeräten SI1, SI2 synchronisiert werden. Um Fehler bei der Extrapolation weitestgehend zu vermeiden, ist es vorteilhaft, wenn die zeitliche Differenz zwischen der Übertragung der ersten Statusinformation SI1 und der zweiten Statusinformation SI2 möglichst gering ist. Vorteilhafterweise erfolgt die Übertragung der Statusinformationen SI1, SI2 im Wesentlichen zeitgleich.

Ist die zeitliche Differenz des Empfanges der ersten Statusinformation SI1 und der zweiten Statusinformation SI2 größer als ein vorbestimmter Schwellenwert, kann es vorgesehen sein, anstelle der Extrapolation der Zeitinformation TS der ersten Statusinformation SI1 des ersten Slave-Gerätes S1 eine aktuelle Statusinformation SI1' von dem ersten Slave-Gerät S1 anzufordern. Da die Statusinformation SI1' zeitlich nach der Statusinformation SI2 bei dem Master-Gerät eintrifft, ist es vorteilhaft, die Zeitinformation TS der zweiten Statusinformation SI2 zu extrapolieren. Weicht die Zeitinformation TS der neu angeforderten Statusinformation SI1' von der Zeitinformation TS der zweiten Statusinformation SI2 ab, muss eine Synchronisation der Wiedergabe durchgeführt werden.

Nachdem die Zeitinformationen TS bei dem Master-Gerät M vorliegen bzw. von diesem extrapoliert worden sind und die Notwendigkeit einer Synchronisation festgestellt worden ist, erzeugt das Master-Gerät M für jedes der Slave-Geräte S1, S2 ein Synchronisationssignal SYN1 bzw. SYN2 und überträgt diese an die Slave-Geräte S1 und S2.

Die Synchronisationssignale SYN1, SYN2 umfassen eine Information über eine vorbestimmte Position der Wiedergabe an den Endgeräten. Diese Position wird aus den Zeitinformationen TS bzw. extrapolierten Zeitinformationen TS ermittelt. Vorzugsweise wird als vorbestimmte Position für die Wiedergabe die Zeitinformation TS mit dem größten Wert (absolute Zeit oder Differenz bezogen auf einen Startzeitpunkt) verwendet.

Nach dem Übertragen der Synchronisationssignale SYN1, SYN2 an die Slave-Geräte S1 bzw. S2 passen diese ihre Wiedergabe an die in den Synchronisationssignalen enthaltene vorbestimmte Position der Wiedergabe an, sodass nach dem Anpassen der Wiedergabe diese wieder synchron ist. Hat sich beispielsweise die Wiedergabe an dem zweiten Slave-Gerät S2 verzögert, kann das zweite Slave-Gerät S2 die Wiedergabe an der in dem Synchronisationssignal SYN2 enthaltenen Position fortsetzen.

In einem Beispiel der Erfindung kann auf ein Erzeugen und Übertragen von Statusinformationen SI1 und SI2 auch verzichtet werden. In diesem Fall kann das Master-Gerät M unabhängig davon, ob die Wiedergabe synchron oder nicht synchron ist, in regelmäßigen oder unregelmäßigen Zeitabständen Synchronisationssignale SYN1 und SYN2 erzeugen und an die Slave-Geräte S1 und S2 übertragen. Als Referenz für die mit den Synchronisationssignalen SYN1, SYN2 zu übertragende vorbestimmte Position der Wiedergabe kann in diesem Fall die aktuelle Position der Wiedergabe an dem Master-Gerät M herangezogen werden. Auch in diesem Fall setzen die Slave-Geräte S1 und S2 ihre Wiedergabe jeweils an der in dem Synchronisationssignal SYN1, SYN2 angegebenen Position fort.

In beiden Varianten ist bei der Bestimmung der vorbestimmten Position die zweite Zeitinformation T2 aus dem anfangs übertragenen Startsignal ST zu berücksichtigen. Das Master-Gerät M speichert hierfür die anfänglich erzeugten Startsignale ST ab.

Erfolgt die Übertragung der Multimediainhalte im Broadcast-Verfahren, ist es vorteilhaft, in den Synchronisationssignalen SYN1 und SYN2 auch eine Gerätekennung der Slave-Geräte S1, S2 vorzusehen, sodass die Slave-Geräte S1, S2 das ihnen zugedachte Synchronisationssignal ermitteln können.

Die Statusinformationen SI1, SI2 und die Synchronisationssignale SYN1 und SYN2 können mehrfach erzeugt und übertragen werden.

Die Wiedergabe der Multimediainhalte an den Slave-Geräten S1, S2 kann entweder durch die Slave-Geräte selbst beendet werden oder durch das Master-Gerät M beendet werden (TERMINATE). Beendet nur eines von mehreren Slave-Geräte die Wiedergabe, kann das Master-Gerät M das für dieses Slave-Gerät gespeicherte Startsignal löschen und das erfindungsgemäße Synchronisationsverfahren mit den übrigen Slave-Geräten fortsetzen.

Sind an der Wiedergabe von Multimediainhalten auch Master/Slave-Geräte beteiligt, dann werden die Startsignale ST über die Master/Slave-Geräte an die entsprechenden Slave-Geräte weitergeleitet. Umgekehrt werden die Statusinformationen SI von den Slave-Geräten über die Master/Slave-Geräte an das Master-Gerät weitergeleitet. Ebenso werden die Synchronisationssignale SYN über die Master/Slave-Geräte den jeweiligen Slave-Geräten zugeführt.

**Fig**. **4a** zeigt ein erstes Beispiel einer Datenstruktur für einen Datenstrom, welche zur Synchronisation in einem erfindungsgemäßen Synchronisationsverfahren geeignet ist.

Vor dem Übertragen der Multimediainhalte in Form eines Datenstromes (streaming data) werden Informationen des Startsignals ST als Header dem Datenstrom hinzugefügt. Der Header enthält Informationen zu den Startsignalen ST1 bis STn für die jeweiligen Endgeräte bzw. Slave-Geräte S. Diese individuellen Startsignale ST1 bis STn enthalten wiederum eine Kennung des jeweiligen Endgerätes sowie eine erste Zeitinformation T1 und eine zweite Zeitinformation T2.

In diesem Beispiel ist vorgesehen, dass in den Datenstrom Synchronisationsinformationen SYN eingefügt werden. Diese Synchronisationsinformationen SYN umfassen die vorstehend genannten Synchronisationssignale SYN1 bis SYNn, welche die Synchronisationsinformationen für die jeweiligen Endgeräte enthalten. Die Synchronisationsinformationen SYN können in regelmäßigen oder unregelmäßigen Abständen in den Datenstrom eingefügt werden. Die in den Datenstrom eingefügten Synchronisationsinformationen beeinflussen die Wiedergabe der Multimediainhalte an den Endgeräten nicht, denn zum Einen ist die Datengröße der Synchronisationsinformationen sehr gering und zum Anderen werden die übertragenen Datenströme vor der Wiedergabe in den Endgeräten zwischengespeichert, sodass die Synchronisationsinformationen vor der tatsächlichen Wiedergabe aus dem Datenstrom entfernt werden können.

**Fig**. **4b** zeigt ein zweites Beispiel für die Übertragung eines Startsignals und der Synchronisationsinformationen an die Endgeräte. Hier werden die jeweiligen Informationen nicht in den Datenstrom eingefügt, sondern als getrennter Datenstrom an die jeweiligen Endgeräte übertragen. Dies hat den Vorteil, dass der an den Endgeräten empfangene Datenstrom nicht mehr aufbereitet werden muss, um die in dem Datenstrom enthaltenen Synchronisationsinformationen SYN zu entfernen.

Insbesondere ist es möglich, den die Multimediainhalte enthaltenen Datenstrom und die Synchronisationsinformationen über unterschiedliche Schnittstellen zu übertragen. Beispielsweise kann der Datenstrom über eine schnelle WLAN-Schnittstelle übertragen werden, während die Synchronisationsinformationen beispielsweise über eine langsamere Bluetooth-Schnittstelle übertragen werden können. Damit kann die verfügbare Bandbreite der WLAN-Schnittstelle vollständig für die Übertragung des Datenstromes ausgenutzt werden. Die Übertragung der Statusinformationen SI kann hier ebenfalls über die langsamere Bluetooth-Schnittstelle abgewickelt werden.

Mit der vorstehend beschriebenen erfindungsgemäßen Lösung kann ein Netzwerk von unterschiedlichen Endgeräten realisiert werden, an denen Multimediainhalte synchron wiedergegeben werden können. Die Synchronität der Wiedergabe kann durch die Synchronisationssignale gewährleistet werden. Dadurch können auch leistungsschwächere Endgeräte an der synchronen Wiedergabe teilnehmen. Das Master-Gerät kann auch durch einen Webserver realisiert werden, sodass der Webserver die Synchronisation der Wiedergabe an mehreren Endgeräten überwacht und ggf. wiederherstellt.

Erfindungsgemäß wird auch ein Computerprogrammprodukt bereitgestellt, welches in den Speicher eines Endgeräte geladen werden kann und welches Programmabschnitte umfasst, mit denen das erfindungsgemäße Verfahren ausgeführt werden kann. Das Computerprogrammprodukt kann beispielsweise als mobile Applikation (App) bereitgestellt werden, sodass ein mobiles Endgerät, etwa ein Smartphone, diese bei Bedarf installieren kann. Das Computerprogrammprodükt kann zum Download auf ein Endgerät bereitgestellt werden.

## Patentansprüche

1. Verfahren zur Synchronisation einer Wiedergabe von maschinenlesbaren Daten,
- wobei die maschinenlesbaren Daten als mindestens ein Datenstrom von einem ersten Endgerät (M) an eine Anzahl zweiter Endgeräte (S) übertragen werden, um an den zweiten Endgeräten (S) wiedergegeben zu werden,
- wobei das erste Endgerät (M) zumindest ein Startsignal (ST) erzeugt, welches eine Information (I) darüber enthält, wann die Wiedergabe der übertragenen maschinenlesbaren Daten starten soll, und das Startsignal (ST) an die zweiten Endgeräte (S) überträgt.
- wobei das Verfahren **dadurch gekennzeichnet ist, daß** die Information (I) eine erste Zeitinformation (T1) und eine zweite Zeitinformation (T2) umfasst, wobei die erste Zeitinformation (T1) ein von einem Zeitgeber des ersten Endgerätes (M) bereitgestellter absoluter Zeitwert ist, und wobei die zweite Zeitinformation (T2) einen relativen Zeitwert bezogen auf die erste Zeitinformation (T1) oder einen absoluten Zeitwert umfasst, wobei die zweite Zeitinformation (T2) den Zeitpunkt des Starts der Wiedergabe der übertragenen maschinenlesbaren Daten angibt, und
- wobei das erste Endgerät (M) zu vorbestimmten Zeitpunkten nach dem Start der Wiedergabe zumindest ein Synchronisationssignal (SYN) erzeugt und an die zweiten Endgeräte (S) überträgt, wobei das Synchronisationssignal (SYN) eine Information über eine vorbestimmte zeitliche Position der Wiedergabe umfasst, wobei
- das erste Endgerät (M) von zumindest einem zweiten Endgerät (S) eine Statusinformation (SI) empfängt, wobei die Statusinformation (SI) eine Zeitinformation (TS), welche die aktuelle zeitliche Position der Wiedergabe an dem jeweiligen zweiten Endgerätes (S) angibt, umfasst, und
- die vorbestimmte zeitliche Position der Wiedergabe aus den Zeitinformationen (TS) der empfangenen Statusinformation (SI) ermittelt wird.

2. Verfahren nach dem vorhergehenden Anspruch, wobei für jedes zweite Endgerät (S) ein individuelles Startsignal (ST) erzeugt wird, wobei das individuelle Startsignal (ST) eine Identifikationskennung des jeweiligen zweiten Endgerätes (S) umfasst.

3. Verfahren nach einem der vorhergehenden Ansprüche, wobei das erste Endgerät (M) von den zweiten Endgeräten (S) Verbindungsaufbauanfragen entgegennimmt, welche zumindest eine Identifikationskennung des jeweiligen zweiten Endgerätes (S) umfassen, die Identifikationskennungen speichert, und an zumindest eines der zweiten Endgeräte (S) eine Anfragebestätigung überträgt.

4. Verfahren nach einem der Ansprüche 2 oder 3, wobei die individuellen Startsignale (ST) zeitgleich und nach dem Start der Übertragung des Datenstromes übertragen werden und in dem ersten Endgerät (M) gespeichert werden.

5. Verfahren nach einem der Ansprüche 1 bis 3, wobei das Startsignal (ST) nach dem Start der Übertragung des Datenstromes übertragen wird und in dem ersten Endgerät (M) gespeichert wird.

6. Verfahren nach einem der vorhergehenden Ansprüche, wobei die Statusinformation (SI) die Identifikationskennung des jeweiligen zweiten Endgerätes (S) umfasst.

7. Verfahren nach einem der vorhergehenden Ansprüche, wobei das zweite Endgerät (S)
- die maschinenlesbaren Daten als Datenstrom von dem ersten Endgerät (M) empfängt, um an dem zweiten Endgerät (S) wiedergegeben zu werden,
- von dem ersten Endgerät (M) das Startsignal (ST) empfängt, und
- die Wiedergabe der maschinenlesbaren Daten in Abhängigkeit des Startsignals (ST) startet.

8. Verfahren nach Anspruch 7, wobei das zweite Endgerät (S) aus einer Anzahl empfangener Startsignale (ST) das ihm zugedachte Startsignal (ST) anhand der Identifikationskennung ermittelt.

9. Verfahren nach einem der Ansprüche 7 bis 8, wobei das zweite Endgerät (S) zu vorbestimmten Zeitpunkten die Statusinformation (SI) erzeugt und die Statusinformation (SI) an das erste Endgerät (M) überträgt.

10. Verfahren nach einem der Ansprüche 7 bis 9, wobei das zweite Endgerät (S) von dem ersten Endgerät (M) das Synchronisationssignal (SYN) empfängt.

11. Verfahren nach Anspruch 10, wobei das zweite Endgerät (S) unter Berücksichtigung des empfangenen Startsignals (ST) aus dem Synchronisationssignal (SYN) eine zeitliche Soll-Position der Wiedergabe ermittelt, und die Wiedergabe an dem zweiten Endgerät (S) an der zeitlichen Soll-Position fortsetzt.

12. Endgerät, insbesondere mobiles Kommunikationsgerät, Lautsprecher und / oder Bildwiedergabeeinrichtung, welches eine Schnittstelle, vorzugsweise eine drahtlose Schnittstelle zur Herstellung einer Datenverbindung zu einer Anzahl weiterer Endgeräte aufweist, und welches angepasst ist ein Verfahren nach einem der vorhergehenden Ansprüche auszuführen.

13. Computerprogrammprodukt, insbesondere mobile Applikation, das in den internen Speicher eines Endgerätes, insbesondere mobiles Kommunikationsgerät, Lautsprecher und / oder Bildwiedergabeeinrichtung geladen werden kann und welches Programmabschnitte umfasst, mit denen das Verfahren gemäß einem der Ansprüche 1 bis 11 ausgeführt werden, wenn das Produkt auf dem Endgerät zur Ausführung gebracht wird.

## Claims

1. A method for synchronising a reproduction of machine-readable data,
- wherein said machine-readable data is transmitted as at least one data stream from a first terminal (M) to a number of second terminals (S) in order to be reproduced on said second terminals (S),
- wherein said first terminal (M) generates at least one starting signal (ST) which contains information (I) as to when the reproduction of the transmitted, machine-readable data is to be started, and transmits the starting signal (ST) to said second terminals (S),
- wherein the method is **characterised in that** said information (I) contains a first item of time information (T1) and a second item of time information (T2), said first time information (T1) being an absolute time value provided by a clock of the first terminal (M) and said second time information (T2) containing a relative time value related to said first time information (T1) or an absolute time value, said second time information (T2) indicating the point in time at which the reproduction of the transmitted, machine-readable data is to be started, and
- wherein at predetermined points in time after the start of the reproduction, said first terminal (M) generates at least one synchronisation signal (SYN) and transmits it to the second terminals (S), said synchronisation signal (SYN) comprising information on a predetermined time position of the reproduction,
- wherein the first terminal (M) receives an item of status information (SI) from at least one second terminal (S), said status information (SI) comprising time information (TS) which indicates the current time position of the reproduction on the respective, second terminal (S), and
- said predetermined time position of the reproduction being determined from the items of time information (TS) of the received status information (SI).

2. The method as claimed in the preceding claim, wherein an individual starting signal (ST) is generated for each second terminal (S), said individual starting signal (ST) comprising an identifier of the respective second terminal (S).

3. The method as claimed in any of the preceding claims, wherein the first terminal (M) receives connection establishment requests from the second terminals (S) which comprise at least one identifier of the respective second terminal (S), stores said identifiers, and transmits a request acknowledgement to at least one of the second terminals (S).

4. The method as claimed in any one of claims 2 or 3, wherein the individual starting signals (ST) are transmitted simultaneously and after the start of the transmission of the data stream and are stored in the first terminal (M).

5. The method as claimed in any one of claims 1 to 3, wherein the starting signal (ST) is transmitted after the start of the transmission of the data stream and is stored in the first terminal (M).

6. The method as claimed in any of the preceding claims, wherein said status information (SI) comprises the identifier of the respective second terminal (S).

7. The method as claimed in any of the preceding claims, wherein the second terminal (S)
- receives said machine-readable data from the first terminal (M) in order to reproduce it on said second terminal (S),
- receives said starting signal (ST) from the first terminal (M), and
- starts the reproduction of the machine-readable data depending on the starting signal (ST).

8. The method as claimed in claim 7, wherein the second terminal (S) uses the identifier to determine the starting signal (ST) allotted to it from among a number of received starting signals (ST).

9. The method as claimed in any one of claims 7 to 8, wherein at predetermined points in time the second terminal (S) generates said status information (SI) and transmits said status information (SI) to the first terminal (M).

10. The method as claimed in any one of claims 7 to 9, wherein the second terminal (S) receives the synchronisation signal (SYN) from the first terminal (M).

11. The method as claimed in claim 10, wherein the second terminal (S) takes into account the received starting signal (ST) to determine from the synchronisation signal (SYN) a desired time position for the reproduction and resumes the reproduction on the second terminal (S) at said desired time position.

12. A terminal, in particular a mobile communication device, a loudspeaker and/or an image reproduction appliance, which has an interface, preferably a wireless interface, for establishing a data connection with a number of other terminals, and which is adapted for carrying out a method as claimed in any of the preceding claims.

13. A computer program product, in particular a mobile application which may be loaded into the internal memory of a terminal, in particular a mobile communication device, a loudspeaker and/or an image reproduction appliance, and which comprises program sections by means of which the method as claimed in any one of claims 1 to 11 is carried out when the product is executed on the terminal.

## Revendications

1. Procédé destiné à synchroniser une reproduction de données lisibles par machine selon lequel
- les données lisibles par machine sont transmises, en tant qu'au moins un flux de données, d'un premier terminal (M) à un nombre donné de deuxièmes terminaux (S) afin d'être reproduites sur lesdits deuxièmes terminaux (S),
- le premier terminal (M) génère au moins un signal de lancement (ST) qui contient une information (I) indiquant le moment où la reproduction des données transmises, lisibles par machine doit être lancée et transmet le signal de lancement (ST) aux deuxièmes terminaux (S),
- le procédé est **caractérisé en ce que** l'information (I) comprend une première information de temps (T1) et une deuxième information de temps (T2), la première information de temps (T1) étant une valeur de temps absolue fournie par une horloge du premier terminal (M) et la deuxième information de temps (T2) comprenant une valeur de temps relative se rapportant à la première information de temps (T1) ou une valeur de temps absolue, la deuxième information de temps (T2) indiquant le moment du lancement de la reproduction des données transmises, lisibles par machine, et
- le premier terminal (M) génère à des moments prédéfinis, après le lancement de la reproduction, au moins un signal de synchronisation (SYN) et le transmet aux deuxièmes terminaux (S), le signal de synchronisation (SYN) comprenant une information relative à une position temporelle prédéfinie de la reproduction,
- le premier terminal (M) reçoit d'au moins un deuxième terminal (S) une information d'état (SI), l'information d'état (SI) comprenant une information de temps (TS) qui indique la position temporelle actuelle de la reproduction sur le deuxième terminal respectif (S), et
- la position temporelle prédéfinie de la reproduction étant déterminée à partir des informations de temps (TS) contenues dans l'information d'état reçue (SI).

2. Procédé selon la revendication précédente selon duquel un signal de lancement individuel (ST) est généré pour chaque deuxième terminal (S), le signal de lancement individuel (ST) comprenant un identifiant du deuxième terminal respectif (S).

3. Procédé selon l'une quelconque des revendications précédentes selon lequel le premier terminal (M) reçoit des deuxièmes terminaux (S) des demandes d'établissement de connexion qui comprennent au moins un identifiant du deuxième terminal respectif (S), stocke lesdits identifiants et transmet une confirmation de demande à au moins un des deuxièmes terminaux (S).

4. Procédé selon l'une quelconque des revendications 2 ou 3 selon duquel les signaux de lancement individuels (ST) sont transmis simultanément et après le lancement de la transmission du flux de données et sont stockés dans le premier terminal (M).

5. Procédé selon l'une quelconque des revendications 1 à 3 selon lequel le signal de lancement (ST) est transmis après le lancement de la transmission du flux de données et est stocké dans le premier terminal (M).

6. Procédé selon l'une quelconque des revendications précédentes selon lequel l'information d'état (SI) comprend l'identifiant du deuxième terminal respectif (S).

7. Procédé selon l'une quelconque des revendications précédentes selon lequel le deuxième terminal (S)
- reçoit du premier terminal (M) les données lisibles par machine en tant que flux de données afin qu'elles soient reproduites sur ledit deuxième terminal (S),
- reçoit du premier terminal (M) le signal de lancement (ST), et
- lance la reproduction des données lisibles par machine en fonction du signal de lancement (ST).

8. Procédé selon la revendication 7 selon lequel le deuxième terminal (S) détermine, à l'aide de l'identifiant, le signal de lancement (ST) qui lui est destiné parmi un nombre donné de signaux de lancement reçus (ST).

9. Procédé selon l'une quelconque des revendications 7 à 8 selon duquel le deuxième terminal (S) génère l'information d'état (SI) à des moments prédéfinis et transmet ladite information d'état (SI) au premier terminal (M).

10. Procédé selon l'une quelconque des revendications 7 à 9 selon duquel le deuxième terminal (S) reçoit du premier terminal (M) le signal de synchronisation (SYN).

11. Procédé selon la revendication 10 selon lequel le deuxième terminal (S) détermine, à partir du signal de synchronisation (SYN), une position temporelle théorique de la reproduction en tenant compte du signal de lancement reçu (ST) et poursuit la reproduction sur le deuxième terminal (S) à ladite position temporelle théorique.

12. Terminal, en particulier appareil de communication mobile, haut-parleur et/ou dispositif reproducteur d'images, qui présente une interface, de préférence une interface sans fil pour l'établissement d'une connexion de données avec un nombre donné d'autres terminaux et lequel est conçu pour exécuter un procédé selon l'une quelconque des revendications précédentes.

13. Produit programme d'ordinateur, en particulier une application mobile, qui peut être chargé dans la mémoire interne d'un terminal, en particulier d'un appareil de communication mobile, haut-parleur et/ou dispositif reproducteur d'images, et qui comprend des sections de programme avec lesquelles le procédé selon l'une quelconque des revendications 1 à 11 est exécuté lorsque l'exécution du produit est lancée sur le terminal.
